# EUROPÄISCHE PATENTSCHRIFT

(11) **EP 2 817 081 B1**
(45) Veröffentlichungstag und Bekanntmachung des Hinweises auf die Patenterteilung: **16.10.2019**
(21) Anmeldenummer: 13709295.3
(22) Anmeldetag: 13.02.2013
(51) Int. Cl.: C08H 7/00, B01D 53/62

(54) **VERFAHREN ZUR AUFBEREITUNG VON IN EINEM ABGASSTROM ENTHALTENEM KOHLENDIOXID**
METHOD FOR PROCESSING CARBON DIOXIDE CONTAINED IN AN EXHAUST GAS FLOW
PROCÉDÉ DE TRAITEMENT DE DIOXYDE DE CARBONE CONTENU DANS UN EFFLUENT GAZEUX

(30) Priorität: 20.02.2012 AT 2042012
(43) Veröffentlichungstag der Anmeldung: 31.12.2014
(73) Patentinhaber: Commerzialbank Mattersburg im Burgenland Aktiengesellschaft, 7210 Mattersburg (AT)
(72) Erfinder: PHILIPP, Franz Josef, A-7212 Forchenstein (AT)
(74) Vertreter: Patentanwälte Barger, Piso & Partner
(86) Internationale Anmeldenummer: PCT/AT2013/050037
(87) Internationale Veröffentlichungsnummer: WO 2013/123539

## Beschreibung

Die vorliegende Erfindung betrifft ein Verfahren zur Aufbereitung von in einem Abgasstrom enthaltenem Kohlendioxid CO₂ in ein zur Energiegewinnung geeignetes Produkt entsprechend dem Oberbegriff des Anspruches 1 und der US2011/0256049.

Diese Druckschrift offenbart ein Verfahren zur Herstellung von Nanosphären und anderen Nanopartikeln aus Kohlenstoff, wobei Kohlendioxid und Magnesiumpulver als Ausgangsmaterialien verwendet werden, die in einem Reaktor miteinander reagieren. Dabei wird durch die erreichte hohe Temperatur, 2000°F bis 5000°F, entsprechend etwa 1100°C bis 2760°C, eine große Energiemenge in Form von Wärme und Licht freigesetzt. Es können verschiedene Zusatzmaterialien verwendet werden, doch ist es unabdingbar, dass das Kohlendioxid rein und nicht als Teil eines Luftgemisches vorliegt.

Es besteht somit ein Bedarf an einem Verfahren, durch das das in einem Abgasstrom enthaltene Kohlendioxid aufbereitet werden kann.

Erfindungsgemäß wird dieses Ziel durch die im kennzeichnenden Teil des Anspruches 1 angegebenen Merkmale erreicht.

Diese Aufbereitung wird erfindungsgemäß dadurch erreicht, dass
a) der eine Temperatur im Bereich von 150 bis 170° C und einen pH-Wert von etwa 4 aufweisende Abgasstrom in einer Trocknungs- und Kühlkammer mit einem porösen, silikatischen Material mit einer Feuchte von 15 - 60 % bezogen auf die trockene Gesamtmasse des silikatischen Materials und beigemischtem Aluminiumhydroxid und/oder Aluminiumoxidhydrat unter Erzeugung eines basischen, wässerigen Milieus mit einem pH-Wert zwischen 10 und 13 in Kontakt gebracht und auf eine Temperatur von 30 bis 50° C gekühlt wird, wobei die Menge von beizumischendem Aluminiumhydroxid und/oder Aluminiumoxidhydrat über laufende pH-Wert-Messung gesteuert wird und wobei das wässerige Milieu bis zum Austritt aus der Trocknungs-und Kühlkammer auf eine Temperatur zwischen 12 und 13° C gekühlt wird,
b) das wässerige Milieu einer darauffolgenden Vorkammer zugeführt wird, die mit oxidierbarem Erdalkali- und/oder Schwermetall führendem Material beschickt ist, wobei eine Oxidation von Erdalkali- und/oder Schwermetall, dessen Verhältnis zur Flüssigkeit des wässerigen Milieus etwa 1: 7 Gew.-% beträgt, durch den vom ionisierten und instabilisierten Kohlendioxid stammenden Sauerstoff und mit einhergehend eine Neutralisierung des wässerigen, ionisierten Kohlenstoff führenden Milieus erfolgt und in der Folge gebildetes Erdalkali- und/oder Schwermetalloxid aus der Vorkammer ausgetragen wird, wobei in Abhängigkeit laufender Messung gleichzeitig oxidierbares Erdalkali- und/oder Schwermetall führendes Material zugeführt wird, und
c) das wässerige, ionisierten Kohlenstoff (C) führende Milieu anschließend einer mit aus organischen Kohlenstoffverbindungen bestehendem und/oder organische Kohlenstoffverbindungen enthaltendem Material bestückten Hauptkammer zugeführt wird, wobei unter Beteiligung des ionisierten Kohlestoffs bei Temperaturen zwischen 5 und 80° C und einem Druck zwischen 0,1 und 10 bar Polyreaktionen mit organischen Kohlenstoffverbindungen unter Bildung eines kohlenstoffangereicherten Endproduktes erfolgen.

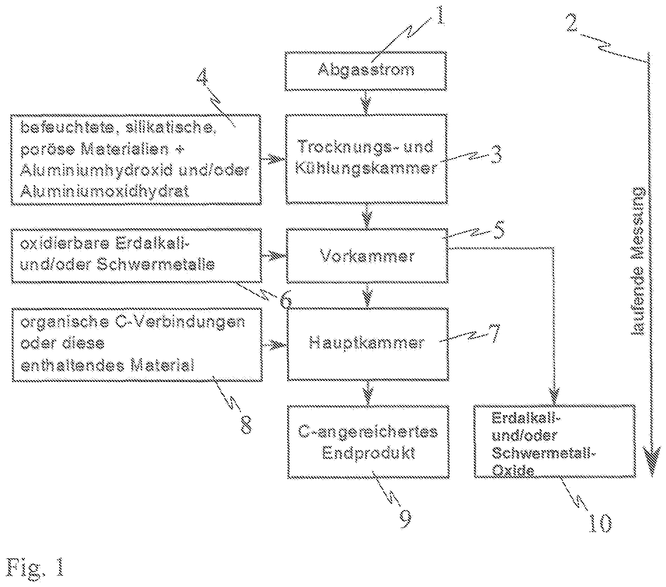

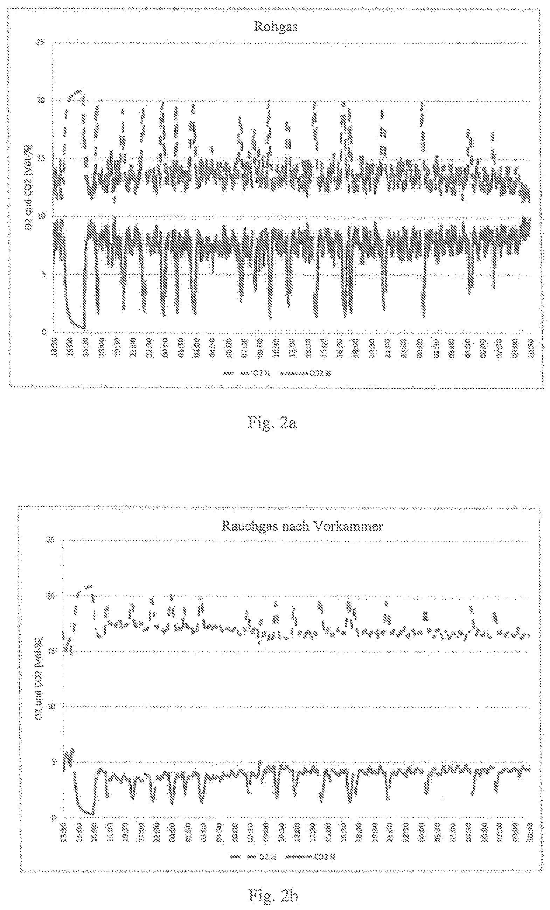

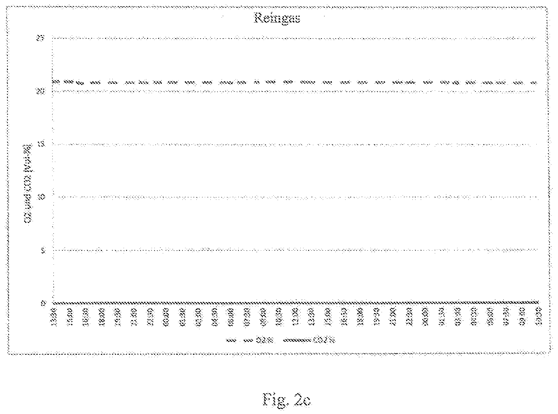

Die Erfindung wird im Folgenden anhand der Zeichnung näher erläutert, worin Fig.1 ein erfindungsgemäßes Ablaufdiagramm eines Verfahrens zur Aufbereitung von in einem Abgasstrom enthaltenem Kohlendioxid CO₂ mit Hilfe eines Dreikammernsystems in ein zur Energiegewinnung geeignetes Produkt und Fig. 2a den durchschnittlichen Ausgangsgehalt von O₂ und CO₂ des zu verarbeitenden Abgasstroms, Fig. 2b den durchschnittlichen Gehalt von O₂ und CO₂ am Ausgang der aus dem Ablaufdiagramm gemäß Fig.1 ersichtlichen Vorkammer und Fig. 2c den durchschnittlichen Gehalt von O₂ und CO₂ am Ausgang der aus dem Ablaufdiagramm gemäß Fig.1 ersichtlichen Hauptkammer, jeweils über einen Messzeitraum von drei Tagen zeigen.

Vorab ist festzuhalten, dass die Einzelkomponenten der verwendeten Materialien als auch die in den jeweiligen Prozessschritten vorliegenden Milieus einer laufenden Messung 2 während des gesamten Verfahrensablaufs unterliegen, wobei je nach Bedarf bzw. in Abhängigkeit der Messergebnisse die Materialbeschickung der jeweiligen Prozesskammern geregelt wird. Beispielsweise wird die Menge an beizumischendem Aluminiumhydroxid und/oder Aluminiumoxidhydrat über eine laufende pH-Wert-Messung 2 gesteuert.

Dabei wird der Abgasstrom 1, beispielsweise Rohgas aus einer Verbrennungsanlage, üblicherweise mit einem pH-Wert von etwa 4 und mit einer Temperatur im Bereich von 150 bis 170 °C, bei modernen Verbrennungsanlagen unter 150 °C, beim Durchströmen einer, gegebenenfalls aus mehreren Kammereinheiten bestehenden Trocknungs- und Kühlungskammer 3, die mit befeuchtetem, silikatischem, porösem Material und beigemischtem Aluminiumhydroxid und/oder Aluminiumoxidhydrat 4 und/oder anderer metallischer Oxidationsmittel beschickt ist, auf eine Temperatur von 30 bis 50 °C gekühlt, wobei ein basisches, wässeriges Milieu erzeugt und das enthaltene Kohlendioxid CO₂ instabilisiert wird. Bei dem befeuchteten, silikatischen, porösen Material 4 handelt es sich beispielsweise um Bims, Schaumlava und/oder Perlit in gekörnter Form mit CO₂ instabilisiert wird. Bei dem befeuchteten, silikatischen, porösen Material 4 handelt es sich beispielsweise um Bims, Schaumlava und/oder Perlit in gekörnter Form mit einem Feuchtegehalt von 15 bis 30 %, bezogen auf die trockene Gesamtmasse des silikatischen Materials 4. Dabei wird das befeuchtete, silikatische, poröse Material 4 getrocknet bzw. dessen Feuchtigkeit vom Abgasstrom 1 aufgenommen, wodurch dieser gekühlt wird. Unter einem wird das in der Trocknungs- und Kühlungskammer 3 erzeugte wässerige Milieu mittels des Aluminiumhydroxids und/oder Aluminiumoxidhydrats auf einen pH-Wert zwischen 10 und 13 gebracht. Das in der Trocknungs- und Kühlungskammer 3 gebildete, wässerige Milieu, in dem das instabilisierte bzw. in ionisierter Form vorliegende Kohlendioxid CO₂ enthalten ist, wird einer nachfolgenden Vorkammer 5 zugeführt, welche mit oxidierbarem Erdalkali- und/oder Schwermetall führendem Material 6 beschickt ist, wobei eine Oxidation von Erdalkali- und/oder Schwermetall 6 und mit einhergehend eine Neutralisierung des wässerigen, ionisierten Kohlenstoff C führenden Milieus erfolgt. Das oxidierbare Erdalkalimetall, vorzugsweise Calcium, und/oder Schwermetall führende Material 6 wird in feinstkörniger Form als Metall-, z.B. Fe-Staub, Flugasche, Kalkhydrat, etc. eingesetzt. Ein bei der Neutralisierung gebildetes Erdalkali- und/oder Schwermetalloxid 10 wird in der Folge als Nebenprodukt aus der Vorkammer 5 ausgetragen, wobei in Abhängigkeit der laufenden Messungen 2 oxidierbares Erdalkali- und/oder Schwermetall führendes Material 6 zugeführt wird. Nach der Vorkammer 5 weist das Milieu üblicherweise einen pH-Wert von 6 auf. Das wässerige, ionisierten Kohlenstoff C führende Milieu wird anschließend einer mit aus organischen Kohlenstoffverbindungen bestehendem und/oder organische Kohlenstoffverbindungen enthaltendem Material 8 bestückten Hauptkammer 7 zugeführt, wobei es sich bei dem Material 8 um Lignin, Ligninderivate, Papierfangstoffe, und/oder Kunststoffmaterialien, Pulpe oder Abfallstoffe, etc. handelt. Es erfolgen unter Beteiligung des ionisierten Kohlestoffs C Polyreaktionen (Kettenverlängerung) mit organischen Kohlenstoffverbindungen unter Bildung eines kohlenstoffangereicherten Endproduktes 9. Die in der Hauptkammer 7 auftretenden Polyreaktionen erfolgen bei Temperaturen zwischen 5 und 80 °C, vorzugsweise 30 - 60° C und besonders bevorzugt bei 40 bis 45 ° C, und unter einem Druck zwischen 0,1 und 10 bar, vorzugsweise zwischen 0,1 und 0,7 bar oder 5 bis 8 bar.

Eine in der Trocknungs- und Kühlungskammer 3 angeordnete Temperatursteuerung dient zur Trennung der Stoffe im jeweiligen stoffspezifischen Zustand (fest, flüssig, gasförmig), um neue Verbindungen herzustellen.

Es ist allgemein zu beachten, dass unter Druck der Anlagerungsprozess des Kohlenstoffs C auf dem befeuchteten, silikatischen, porösen Material 4 schneller erfolgt bzw. auch eine wesentlich größere Anlagerung stattfindet. Zusätzlich können weitere Stoffmischungen als Reaktionsbeschleuniger der Hauptkammer 7 zugeführt werden, um das Reaktionsvermögen der Stoffe und die Temperaturen in der Hauptkammer 7 so zu gestalten, dass eine optimale Aufbereitung des im Abgasstrom 1 enthaltenen Kohlendioxids CO₂ erfolgt bzw. ein C-angereichertes Endprodukt 9 entsteht.

Das erfindungsgemäße Verfahren wird anhand eines bevorzugten Ausführungsbeispiels näher erläutert.

Als Rohstoffquelle für den Abgasstrom wird Abfallholz verwendet. Das von der Verbrennung von zerkleinertem Abfallholz herrührende Rohgas, das einen durchschnittlichen Gehalt an O₂ zwischen 11,5 und 14 Vol.-% und an CO₂ zwischen 7 und 9 Vol.-% aufweist, wird mit einer Temperatur von ca. 150° C einer Trocknungs- und Kühlkammer zugeführt, in der der Abgasstrom auf eine Temperatur ≤ 40° C, vorzugsweise ca. 30° C, abgekühlt wird und die mit Bims als poröses silikatisches Material mit einer Feuchte bis zu 60 %, bezogen auf Trockenmasse, mit beigemischtem Aluminiumhydroxid und/oder -oxidhydrat, welche Aluminiumverbindungen bei der Kaliproduktion anfallen, beschickt ist. Der Abgasstrom nimmt die Feuchte des Bims auf, wobei der Abgasstrom gekühlt wird. Gleichzeitig wird ein wässeriges Milieu unter Bildung einer stabilen Suspension der Aluminiumverbindungen in Wasser in der Trocknungs- und Kühlkammer erzeugt. In dem wässerigen Milieu, das einen pH-Wert von ungefähr neutral bis stärker basisch, pH 10 bis 13 aufweist, wird das darin enthaltene Kohlendioxid (CO₂) ionisiert und instabilisiert, wobei das wässerige Milieu bis zu seinem Austritt aus der Trocknungs- und Kühlkammer auf eine Temperatur zwischen 12-13° C abgekühlt wird.

Das wässerige Milieu wird von der Trocknungs- und Kühlkammer in eine nachgeschaltete Vorkammer weitergeleitet, die mit Eisenspänen als oxidierbarem Material beschickt ist, wobei das Verhältnis von oxidierbarem Material zu Flüssigkeit des wässerigen Milieus etwa 1:7 Gew.-% beträgt. Die Eisenspäne werden bei gleichzeitiger Neutralisierung des Vorkammermilieus durch den vom ionisierten und instabilisierten Kohlendioxid stammenden Sauerstoff oxidiert. Am Ausgang aus der Vorkammer weist das wässerige Milieu einen durchschnittlichen Gehalt an O₂ von etwa 16-17 Vol.-% und von CO₂ von etwa 3,5-4 Vol.-% bei einem pH-Wert von etwa 6 auf.

Zur weiteren Behandlung wird das wässerige, Kohlenstoff führende Milieu in eine Hauptkammer weitergeleitet, die mit organische Kohlenstoffverbindungen enthaltenden Materialien bestückt ist. Vorzugsweise werden hier Lignin führende Papierfangstoffe eingesetzt, die in gleicher Weise durch irgendwelche Kunststoffmaterialien, Pulpe und/oder aliphatische und/oder aromatische Kohlenstoffverbindungen führende Abfallstoffe austauschbar sind. Unter Beteiligung des im wässerigen Milieu enthaltenen ionisierten Kohlenstoffs kommt es in der Hauptkammer zu Polyreaktionen, Polymerisationen und Polykondensationen, mit den organischen Kohlenstoffverbindungen des darin befindlichen Papierfangstoffs unter Bildung eines Kohlenstoff angereicherten Endprodukts, das als Trägergerüst einen Silikatanteil von etwa 20-25 Vol.-% aufweist. Die Polyreaktion in der Hauptkammer erfolgt vorzugsweise bei einer Temperatur zwischen 40 und 45° C unter einem Druck von 7-8 bar. Unter diesen Druck- und Temperaturbedingungen ist schließlich auch der Silikatanteil vom kohlenstoffreichen Endprodukt abtrennbar, das einen auf verschiedenste Weise verwertbaren Basisrohstoff darstellt. Durch diese Aufbereitung des Abgasstroms wird am Ausgang aus der Hauptkammer schließlich ein Reingas erzielt, das einen durchschnittlichen Gehalt von O₂ von 22 Vol.-% und von CO₂ von 0,2 Vol.-% aufweist.

Durch laufende Messung der einzelnen Verfahrensparameter, wie Druck, Temperatur, Materialmengen und -zusammensetzungen in den einzelnen Verfahrensabschnitten ist eine Optimierung des Verfahrensablaufes und Ergebnisses gewährleistet.

## Patentansprüche

1. Verfahren zur Aufbereitung von in einem Abgasstrom (1) enthaltenem Kohlendioxid (CO₂) in ein zur Energiegewinnung geeignetes Produkt, **dadurch gekennzeichnet, dass**
a) der eine Temperatur im Bereich von 150 bis 170° C und einen pH-Wert von etwa 4 aufweisende Abgasstrom (1) in einer Trocknungs- und Kühlkammer (3) mit einem porösen, silikatischen Material mit einer Feuchte von 15 - 60 % bezogen auf die trockene Gesamtmasse des silikatischen Materials und beigemischtem Aluminiumhydroxid und/oder Aluminiumoxidhydrat (4) unter Erzeugung eines basischen, wässerigen Milieus mit einem pH-Wert zwischen 10 und 13 in Kontakt gebracht und auf eine Temperatur von 30 bis 50° C gekühlt wird, wobei die Menge von beizumischendem Aluminiumhydroxid und/oder Aluminiumoxidhydrat (4) über laufende pH-Wert-Messung (2) gesteuert wird und wobei das wässerige Milieu bis zum Austritt aus der Trocknungs-und Kühlkammer auf eine Temperatur zwischen 12 und 13° C gekühlt wird,
b) das wässerige Milieu einer darauffolgenden Vorkammer (5) zugeführt wird, die mit oxidierbarem Erdalkali- und/oder Schwermetall führendem Material (6) beschickt ist, wobei eine Oxidation von Erdalkali- und/oder Schwermetall (6) durch den vom ionisierten und instablisierten Kohlendioxid stammenden Sauerstoff und mit einhergehend eine Neutralisierung des wässerigen, ionisierten Kohlenstoff führenden Milieus erfolgt und in der Folge gebildetes Erdalkali- und/oder Schwermetalloxid (10) aus der Vorkammer (5) ausgetragen wird, wobei in Abhängigkeit laufender pH-Wert- Messung (2) gleichzeitig oxidierbares Erdalkali- und/oder Schwermetall führendes Material (6) zugeführt wird, und
c) das wässerige, ionisierten Kohlenstoff (C) führende Milieu anschließend einer mit aus organischen Kohlenstoffverbindungen bestehendem und/oder organische Kohlenstoffverbindungen enthaltendem Material (8) bestückten Hauptkammer (7) zugeführt wird, wobei unter Beteiligung des ionisierten Kohlestoffs (C) bei Temperaturen zwischen 5 und 80° C und einem Druck zwischen 0,1 und 10 bar Polyreaktionen mit organischen Kohlenstoffverbindungen unter Bildung eines kohlenstoffangereicherten Endproduktes (9) erfolgen.

2. Verfahren nach Anspruch 1, **dadurch gekennzeichnet, dass** als befeuchtetes, poröses, silikatisches Material (4) Bims, Schaumlava und/oder Perlit in gekörnter Form eingesetzt wird.

3. Verfahren nach Anspruch 1, **dadurch gekennzeichnet, dass** das oxidierbare Erdalkali- und/oder Schwermetall führende Material (6) in feinstkörniger Form als Metall-, z.B. Fe-Staub, Flugasche, Kalkhydrat eingesetzt wird.

4. Verfahren nach Anspruch 1, **dadurch gekennzeichnet, dass** als aus organischen Kohlenstoffverbindungen bestehendes und/oder organische Kohlenstoffverbindungen enthaltendes, in der Hauptkammer verwendete Material (8) Lignin, Ligninderivate, Papierfangstoff und/oder Kunststoffmaterialien eingesetzt wird.

5. Verfahren nach Anspruch 1, **dadurch gekennzeichnet, dass** die Polyreaktionen in der Hauptkammer (7) bei Temperaturen zwischen 30 und 60 °C, vorzugsweise 40 bis 45° C erfolgen.

6. Verfahren nach Anspruch 1, **dadurch gekennzeichnet, dass** die Polyreaktion in der Hauptkammer (7) unter einem Druck zwischen 0,1 und 0,7 bar oder 5 bis 8 bar erfolgt.

## Claims

1. Method for processing of carbon dioxide (C02) contained in an exhaust gas flow (1) to a product suitable for energy production, **characterized by** the fact that
a) the exhaust gas flow (1), having a temperature in the range of 150 to 170°C and a pH value of around 4, is brought in contact in a drying and cooling chamber (3) with a porous silicate material having a moisture of 15 to 60 %, referred to the dry total weight of the silicate material and an admixed aluminium hydroxide and/or hydrated aluminum oxide (4) to form a basic aqueous medium with a pH value between 10 and 13 and is cooled to a temperature between 30 and 50°C, in which the amount of aluminum hydroxide and/or hydrated aluminum oxide (4) to be added is controlled via a continuous pH value measurement (2), and in which the aqueous medium is cooled until the exit from the drying and cooling chamber to a temperature between 12 and 13°C,
b) the aqueous medium is fed to a subsequent prechamber (5), which is supplied with material containing oxidizable alkaline earth and/or heavy metal (6), in which oxidation of alkaline earth and/or heavy metal (6) by the oxygen resulting from the ionized and destabilized carbon dioxide, with accompanying neutralization of the aqueous medium containing ionized carbon takes place; and the formed alkaline earth and/or heavy metal oxide (10) is discharged from the prechamber (5), in which material (6) containing oxidizable alkaline earth and/or heavy metal is simultaneously supplied as a function of continuous pH value measurement (2) and
c) the aqueous medium containing ionized carbon (C) is then fed to a main chamber (7) supplied with material (8) consisting of organic carbon compounds and/or containing organic carbon compounds, in which polyreactions with organic carbon compounds occur with participation of the ionized carbon (C) at temperatures between 5 and 80°C and a pressure between 0,1 and 10 bar, to form a carbon-enriched end product (9).

2. Method according to claim 1, **characterized by** the fact that pumice, foam lava and/or perlite in granular form is used as moistened, porous silicate material (4).

3. Method according to claim 1, **characterized by** the fact that material (6) containing oxidizable alkaline earth and/or heavy metal is used in fine granular form as metal, for example, Fe dust, fly ash, hydrated lime.

4. Method according to claim 1, **characterized by** the fact that lignin, lignin derivative, recovered paper stock and/or plastic materials are used as material (8) in the main chamber consisting of organic compounds and/or containing organic compounds.

5. Method according to claim 1, **characterized by** the fact that the polyreactions in the main chamber (7) occur at temperatures between 30 and 60°C, preferably between 40 and 45°C.

6. Method according to claim 1, **characterized by** the fact that the polyreaction in the main chamber (7) occurs under a pressure between 0,1 and 0,7 bar or between 5 to 8 bar.

## Revendications

1. Procédé pour le traitement du dioxyde de carbone (CO₂) contenu dans un courant d'effluent gazeux (1) dans un produit convenant à la production d'énergie, **caractérisé en ce que**
a) le courant d'effluent gazeux (1), présentant une température comprise dans la plage de 150 à 170 °C et un pH d'environ 4, est, dans une chambre de séchage et de refroidissement (3), mis en contact avec un matériau silicaté poreux ayant une humidité de 15 à 60 % par rapport à la masse sèche totale du matériau silicaté et de l'hydroxyde d'aluminium et/ou de l'oxyde d'aluminium hydraté (4) ajouté, avec production d'un milieu aqueux basique ayant un pH compris entre 10 et 13, et refroidi à une température de 30 à 50 °C, la quantité de l'hydroxyde d'aluminium et/ou de l'oxyde d'aluminium hydraté ajouté (4) étant pilotée par une mesure continue (2) du pH, et le milieu aqueux étant, jusqu'à sa sortie de la chambre de séchage de refroidissement, refroidi à une température comprise entre 12 et 13 °C,
b) le milieu aqueux est envoyé à une préchambre (5) disposée en aval, qui est chargée d'un matériau (6) oxydable, portant un métal alcalino-terreux et/ou un métal lourd, une oxydation du métal alcalino-terreux et/ou du métal lourd étant réalisée grâce à l'oxygène provenant du dioxyde de carbone ionisé et rendu instable, et à un milieu conduisant d'une manière concomitante à une neutralisation du carbone ionisé aqueux, et l'oxyde de métal alcalino-terreux et/ou de métal lourd (10), formé en conséquence, étant expulsé de la préchambre (5), un matériau (6) portant un métal alcalino-terreux et/ou un métal lourd oxydable étant simultanément amené en fonction de la mesure continue (2) du pH, et
c) le milieu portant le carbone ionisé aqueux (C) est ensuite envoyé dans une chambre principale (7), dans laquelle on a chargé le matériau (8), constitué de composés organiques du carbone et/ou contenant des composés organiques du carbone, des polyréactions avec des composés organiques du carbone se produisant avec formation d'un produit final (9) enrichi en carbone, avec participation du carbone ionisé (C) à des températures comprises entre 5 et 80 °C et sous une pression comprise entre 0,1 et 10 bar.

2. Procédé selon la revendication 1, **caractérisé en ce qu'**on utilise en tant que matériau silicaté poreux humidifié (4) de la pierre ponce, de la lave boursouflée et/ou de la perlite, sous une forme granulaire.

3. Procédé selon la revendication 1, **caractérisé en ce que** le matériau (6) oxydable, portant un métal alcalino-terreux et/ou un métal lourd, est utilisé sous une forme très finement divisée, sous forme d'une poudre métallique, par exemple de Fe, de cendres volantes, de chaux hydratée.

4. Procédé selon la revendication 1, **caractérisé en ce qu'**on utilise en tant que matériau (8) constitué de composés organiques du carbone et/ou contenant des composés organiques du carbone, utilisé dans la chambre principale, de la lignine, des dérivés de lignine, des rejets de papeterie et/ou des matériaux plastiques.

5. Procédé selon la revendication 1, **caractérisé en ce que** les polyréactions ont lieu dans la chambre principale (7) à des températures comprises entre 30 et 60 °C, de préférence entre 40 et 45 °C.

6. Procédé selon la revendication 1, **caractérisé en ce que** la polyréaction a lieu dans la chambre principale (7) sous une pression comprise entre 0,1 et 0,7 bar ou entre 5 et 8 bar.
